# EUROPEAN PATENT APPLICATION

(11) **EP 2 194 444 A2**
(43) Date of publication of application: **09.06.2010**
(21) Application number: 09178342.3
(22) Date of filing: 08.12.2009
(51) Int. Cl.: G06F 3/01, G06F 3/041

(54) **Method for providing haptic feedback in a touch screen**

(30) Priority: 08.12.2008 KR 20080124063
(71) Applicant: SAMSUNG ELECTRONICS CO., LTD., Suwon-si, Gyeonggi-do (KR)
(72) Inventor: Bae, Yu-Dong, Gyeonggi-do (KR); Lee, Eun-Hwa, Gyeonggi-do (KR); Yun, In-Kuk, Gyeonggi-do (KR); Kim, In, Gyeonggi-do (KR); Seo, Seong-Min, Gyeonggi-do (KR)
(74) Representative: Grünecker, Kinkeldey, Stockmair & Schwanhäusser Anwaltssozietät

(57) **Abstract**

Disclosed is a method for providing a haptic feedback in a touch screen, which includes displaying a plurality of soft buttons on a touch screen; applying a first pattern vibration to the touch screen if a pressing detection value for a corresponding soft button according to contact of a user input means reaches a predetermined first threshold value; and applying a second pattern vibration to the touch screen if a pressing detection value for the corresponding soft button reaches a predetermined second threshold value, the second pattern vibration being different from the first pattern vibration, the second threshold value being different from the first threshold value.

## Description

### Field of the Invention

The present invention relates to a touch screen, and more particularly to a method for providing haptic feedback in a touch screen.

### Background to the Invention

A touch screen can provide a relatively large display screen area and also have a simple and slim design. Because of this, touch screens have recently been applied to portable terminals. Contrary to the conventional keypad for a portable terminal having a plurality of mechanical key buttons, the conventional touch screen provides soft buttons so that when pressed, there is no click sense, thereby causing the disadvantage of frequent key input error.

In order to overcome this disadvantage, a method for providing a haptic feedback using a vibration motor in which a user input means generates a vibration feedback when being in contact with the touch screen so that the user can recognize the key input had been suggested.

In the conventional keypad structure, the key contact is discriminated with the key input but in the touch screen, the key input is generated directly when the user is in contact with a surface of the touch screen. This may result in a problem in that malfunction frequently occurs. Further, the user can three-dimensionally recognize each shape of the key buttons in the conventional mechanical key pad so that it is possible to recognize an edge area between the key buttons. However, the surface of the touch screen is a complete flat so that there is a problem in that the edge area between the soft buttons cannot be recognized at all.

### Summary of the Invention

It is an aim of certain embodiments of the invention to solve, mitigate or obviate, at least partly, at least one of the problems and/or disadvantages associated with the prior art. Certain embodiments aim to provide at least one of the advantages described below.

Accordingly, the present invention has been made to solve the above-stated problems occurring in the prior art, and an object of the present invention is to provide a method for discriminating key contact with a key input on a touch screen and providing a haptic feedback.

Further, another object of the present invention is to provide a method for informing a user of an edge area between soft buttons displayed on a touch screen with the haptic feedback.

In accordance with an aspect of the present invention, there is provided a method for providing a haptic feedback in a touch screen, the method including displaying a plurality of soft buttons on a touch screen; applying a first pattern vibration to the touch screen if a pressing detection value for a corresponding soft button according to contact of a user input means reaches a predetermined first threshold value; and applying a second pattern vibration to the touch screen if a pressing detection value for the corresponding soft button reaches a predetermined second threshold value, the second pattern vibration being different from the first pattern vibration, the second threshold value being different from the first threshold value.

In accordance with another aspect of the present invention, there is provided a method for providing a haptic feedback in a touch screen, the method including displaying a plurality of soft buttons on a touch screen; applying a first pattern vibration to the touch screen if a pressing detection value for a corresponding soft button according to contact of a user input means reaches a predetermined first threshold value; and applying a second pattern vibration to the touch screen if the user input means is in contact with an edge area or edge line between the soft buttons, the second pattern vibration being different from the first pattern vibration.

In accordance with another aspect of the present invention, there is provided a computer-readable storage medium storing a program for executing the method for providing the haptic feedback in the touch screen.

In accordance with another aspect of the present invention, there is provided a portable terminal including a computer-readable storage medium storing a program for executing the method for providing the haptic feedback in the touch screen.

### Brief Description of the Drawings

The above and other aspects, features and advantages of the present invention will be more apparent from the following detailed description taken in conjunction with the accompanying drawings, in which:
FIG. 1 is a diagram illustrating a portable terminal providing a haptic feedback in a touch screen according to an embodiment of the present invention;
FIG. 2 is a diagram illustrating a detailed construction of the touch screen of FIG. 1;
FIG. 3 is a diagram illustrating a detailed construction of another example of a touch screen according to the present invention;
FIG. 4 is a diagram illustrating a scheme of a key input detection in a conventional touch screen;
FIGs. 5A to 5C are diagrams illustrating a scheme of the key input detection in a touch screen according to an embodiment of the present invention;
FIG. 6 is a diagram illustrating a part of soft buttons displayed on a touch screen; and
FIGs. 7A to 7C are diagrams illustrating a scheme of an edge area discrimination of a touch screen according to an embodiment of the present invention.

### Description of Embodiments of the Invention

Hereinafter, embodiments of the present invention will be described with reference to the accompanying drawings. In the following description, detailed explanation of known related functions and constitutions may be omitted to avoid unnecessarily obscuring the subject matter of the present invention.

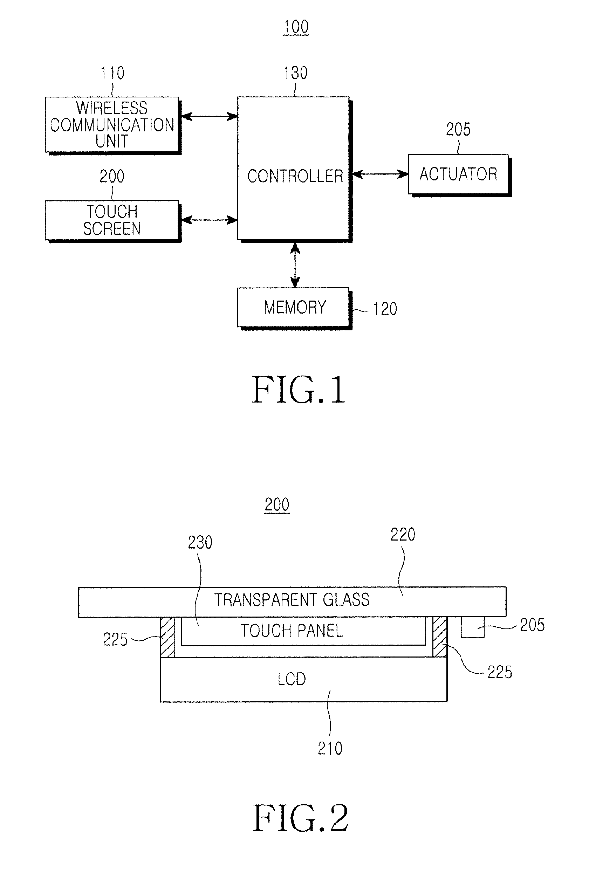

FIG. 1 is a diagram illustrating a portable terminal providing a haptic feedback in a touch screen according to an embodiment of the present invention and FIG. 2 is a diagram illustrating the detailed construction of the touch screen of FIG. 1.

According to FIG. 1, a portable terminal 100 includes a wireless communication unit 110, a touch screen 200, at least one actuator 205 included in the touch screen 200, memory I20, and a controller 130. However, the portable terminal 100 can additionally include a camera, a speaker, a microphone, or the like.

The wireless communication unit 110 receives a wireless downlink signal from the air using an antenna and outputs downlink data obtained through demodulating the wireless downlink signal to the controller 130. Further, the wireless communication unit 110 modulates uplink data inputted from the controller 130 to generate a wireless uplink signal and wirelessly transmits the generated wireless uplink signal to the air using the antenna. Such modulation and demodulation can be preferably performed in a Code Division Multiple Access (CDMA) scheme, as well as in a Frequency Division Multiplexing (FDM) scheme, a Time Division Multiplexing (TDM) scheme, or the like.

The touch screen 200 displays an image according to the control of the controller 130, generates a key contact interrupt signal if a user input means, such as a finger or stylus pen, is in contact with a surface of the touch screen 200, and outputs user input information including an input position and an input state to the controller 130 according to the control of the controller 130. The input position can be represented as input coordinates. At this time, the key contact interrupt signal is identical to the key input interrupt signal generated in a conventional touch screen. The touch screen 200 can output a detection value (pressure, resistance, or capacitance) according to the operation scheme (pressure-type, resistance-type, capacitance-type, etc.) to the controller 130 or generate the key input interrupt signal indicating the click of the user (i.e. key input), except for the key contact interrupt signal. The present invention discriminates the key contact and key click of the user and sets a key contact threshold value and a key input threshold value for the discrimination, and monitors if the detection value of the touch screen 200 reaches the threshold values.

Hereinafter, the case where the touch screen 200 generates the key contact signal and key input interrupt signal will be described. However, if the touch screen 200 outputs the detection value to the controller 130 and does not generate the separate key input interrupt signal, the controller 130 monitors the detection value so that it can be determined that the key input interrupt signal is generated if the detection value reaches the key input threshold value. Further, the key input interrupt signal is always generated after the generation of the key contact interrupt signal so that the controller 130 can optionally select whether to receive the user input information when the key input interrupt signal is generated.

Referring to FIG. 2, the touch screen 200 includes a Liquid Crystal Display (LCD) 210, a transparent glass 220 attached to an upper part of the LCD 210 using a bonding member 225, a touch panel 230 installed on a lower side of the transparent glass 220, and at least one actuator 205.

The LCD 210 displays an image according to the control of the controller 130. The conventional LCD includes a liquid crystal display panel including a liquid crystal layer to display an image, and a back light unit (BLU) for providing light to the liquid crystal display panel. The liquid crystal display panel includes the liquid crystal layer and upper and lower glass substrates disposed on upper and lower sides of the liquid crystal layer so as to control the arrangement of liquid crystal molecules. The lower glass substrate includes thin film transistors and pixel electrodes and the upper glass substrate includes a common electrode. The liquid crystal display panel further includes upper and lower polarization plates disposed on upper and lower sides of the liquid crystal layer for linearly polarizing the input light, respectively. At this time, the polarization directions of the upper and lower polarization plates are perpendicular to each other.

If a user input means, such as a finger or stylus pen, is in contact with a surface of the transparent glass 220, the touch panel 230 generates the key contact interrupt signal or key input interrupt signal and outputs the user input information including an input position and an input state to the controller 130 according to the control of the controller 130.

At least one actuator 205 is installed on a lower side of the transparent glass 220 and applies vibration of a pattern according to a driving signal inputted from the controller 130 to the touch screen 200.

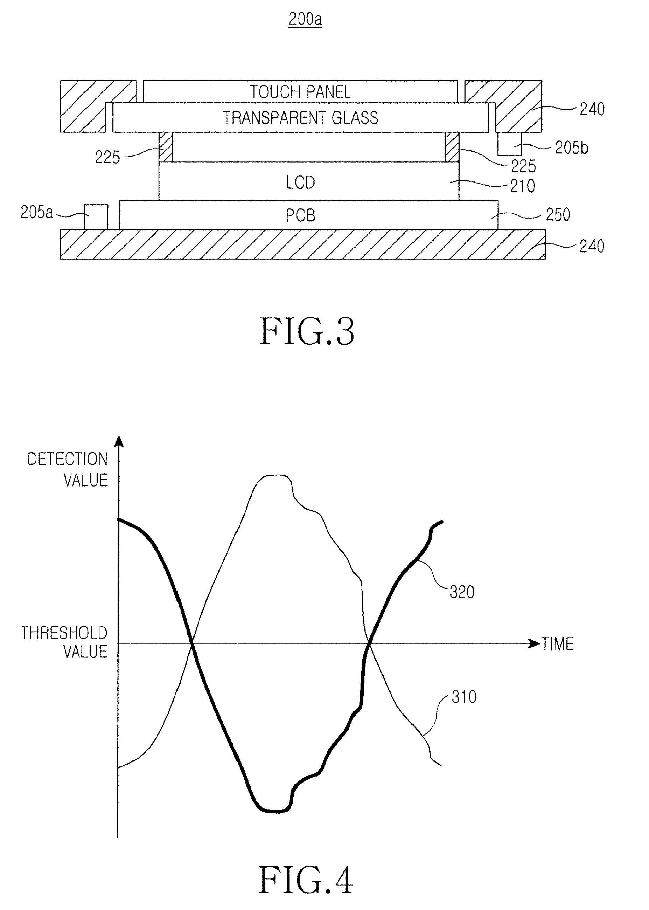

An actuator 205 that can generate both high-frequency vibration and low-frequency vibration can be very expensive. Therefore, as shown in the description with reference to FIG. 3, the actuator for high frequency vibration and the actuator for low frequency vibration may be separately installed.

FIG. 3 is a diagram illustrating another example of the touch screen according to the present invention. The touch screen 200a has a construction similar to that of the touch screen 200 shown in FIG. 2 so that constructional elements having the same function will be designated by the same reference numerals and a detailed description will therefore be omitted. The touch screen 200a includes a housing 240, a Printed Circuit Board (PCB) 250, the LCD 210, the transparent glass 220 attached to the upper part of the LCD 210 using the bonding member 225, the touch panel 230 installed on an upper side of the transparent glass 220, and first and second actuators 205a and 205b.

The housing 240 may be a housing of the touch screen 200a or a housing of the portable terminal. The PCB 250 is mounted on a bottom surface of an inner side of the housing 240 and supplies power and a driving signal to the LCD 210. The LCD 210 is mounted on an upper part of the PCB 250.

The first actuator 205a is installed on a bottom surface of the inner side of the housing 240 and applies the low-frequency vibration of the pattern according to the driving signal inputted from the controller 130 to the touch screen 200a.

The second actuator 205b is installed on an inner surface of an upper side of the housing 240 and applies the high-frequency vibration of the pattern according to the driving signal inputted from the controller 130 to the touch screen 200a.

Referring to FIG. 1 again, the memory 120 stores applications of various functions, as well as images for providing the Graphic User Interface (GUI), databases relating to user information, documents, or the like, background images (menu image, standby screen, etc.) required for driving the portable terminal 100, and operation programs.

The controller 130 outputs the driving signal of the actuator according to the generation of the key contact interrupt signal or key input interrupt signal and executes a program operation according to the user input information, that is, a program operation such as character output, item selection or movement on the screen. For example, when a message transmission application is executed and the user clicks a soft button of character 'A' displayed on the touch screen 200, the message transmission application perfoms a program operation corresponding to a key input event, i.e. display of character 'A' on a message input window.

The input state generally indicates any one of mouse down, mouse up, and mouse movement. The mouse down signal is generated when the user input means presses one point of the touch screen 200, the mouse up signal is generated when the user input means is separated from one point of the touch screen 200, and the mouse movement signal is generated when the user input means moves while pressing the touch screen 200. For example, the mouse up signal can be referred to a mouse up event or mouse up operation.

The pressing pressure of the user can be directly detected in the pressure-type touch screen. If the pressing pressure of the user increases, the resistance decreases in the resistance-type touch screen, and if the pressing pressure of the user increases, the capacitance decreases in the capacitance-type touch screen.

FIG. 4 is a diagram illustrating a scheme of a key input detection in a conventional touch screen. FIG 4 illustrates a detection value curve 310 of the pressure-type touch screen and a detection value curve 320 of the resistance-type or capacitance-type touch screen.

If the pressing pressure of the user reaches the predetermined threshold value, the pressure-type touch screen determines that the key input is generated and outputs user input information including an input position and an input state. If a resistance value according to the pressing pressure of the user reaches the predetermined threshold value, the resistance-type touch screen determines that the key input is generated and outputs user input information including an input position and an input state. If a capacitance value according to the pressing pressure of the user reaches the predetermined threshold value, the capacitance-type touch screen determines that the key input is generated and outputs user information including an input position and an input state.

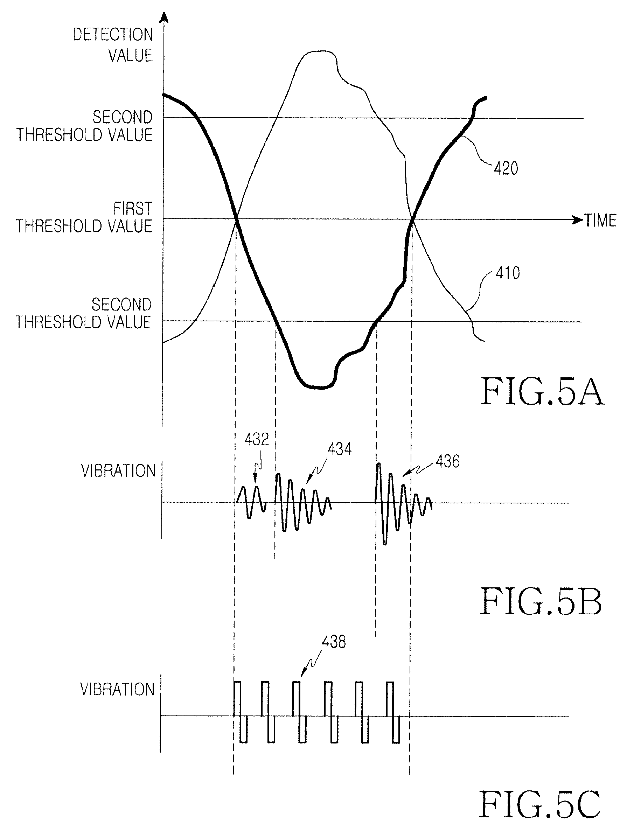

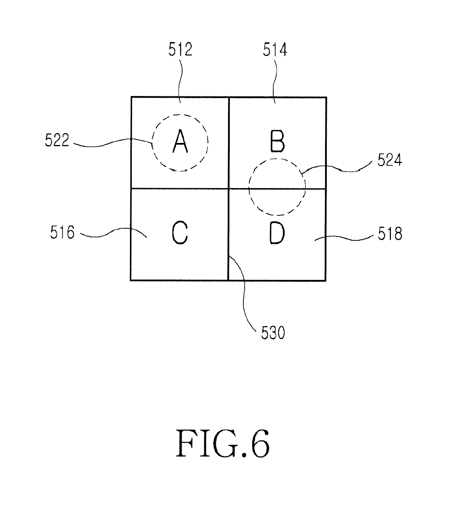

FIGs. 5A to 5C are diagrams illustrating a scheme of the key input detection in the touch screen according to embodiment of the present invention and FIG. 6 is a diagram illustrating a part of soft buttons displayed on a touch screen.

First, FIG. 6 shows 4 soft buttons 512 to 518 and two user pressing areas 522 and 524. The pressing area 522 within 'A' button 512 is not overlapped with an edge line 530 between the soft buttons and the pressing area 524 laid across 'B' button 514 and 'D' button 518 is overlapped with the edge line 530 between the soft buttons.

FIG. 5A is a graph illustrating the change of the detection value according to time, FIG. 5B illustrates a vibration waveform according to the pressure applied to the soft button, and FIG. 5C illustrates a vibration waveform according to the pressure applied to the edge line or edge area.

If the pressing pressure of the user increases or decreases to reach a predetermined first threshold value, the touch screen 200 determines that the key contact has occurred and generates the key contact interrupt signal. If the pressing pressure of the user increases or decreases to reach a predetermined second threshold value, the touch screen 200 determines that the key input has occurred and generates the key input interrupt signal.

If the key contact interrupt signal is generated by the touch screen 200, and the input position of the user is within the soft button that is a non-edge area and the input state is in the state of the mouse down or mouse movement at the same time, the controller 130 determines that the user input means is in contact with the corresponding soft button and simultaneously controls the actuator 205 to apply a first pattern vibration 432 to the touch screen 200.

If the key input interrupt signal is generated by the touch screen 200, and the input position of the user is within the soft button that is a non-edge area and the input state is in the state of the mouse down or mouse movement at the same time, the controller 130 determines that the user input means clicks the corresponding soft button and simultaneously controls the actuator 205 to apply a second pattern vibration 434 to the touch screen 200.

If the key input interrupt signal is generated by the touch screen 200, and the input position of the user is within the soft button that is a non-edge area and the input state is in the state of the mouse up at the same time, the controller 130 determines that the user input means clicks the corresponding soft button and simultaneously controls the actuator 205 to apply a third pattern vibration 436 to the touch screen 200.

If the key contact interrupt signal or key input interrupt signal is generated by the touch screen 200 and the input position of the user is within the edge area (including an area adjacent to the edge line), and the input state is in the state of the mouse down or mouse movement at the same time, the controller 130 determines that the user input means touches or clicks the edge area and simultaneously controls the actuator 205 to apply a fourth pattern vibration 438 to the touch screen 200, as shown in FIG. 5C.

The first to third vibrations 432, 434, and 436 are low-frequency continuous waveforms and their amplitudes can be arbitrarily selected. However, it is preferred that the first pattern vibration 432 among the first to third vibrations 432, 434, and 436 is set to have the lowest amplitude and the fourth pattern vibration 438 is a short and strong pulse waveform or a high frequency. If the user touches or clicks the edge area, the user feels a rough vibration feedback, and if the user touches or clicks the soft button, the user feels a relatively soft vibration feedback. Further, if the user touches the soft button, the user feels a fine vibration and if the user clicks the soft button, the user feels a soft, but relatively strong vibration. Further, the vibration when pressing the soft button (i.e. the vibration in the mouse down or mouse movement) is different from the vibration when releasing the soft button (i.e. the vibration in the mouse up) so that the user can discriminate the mouse down and the mouse up based on the vibration feedback.

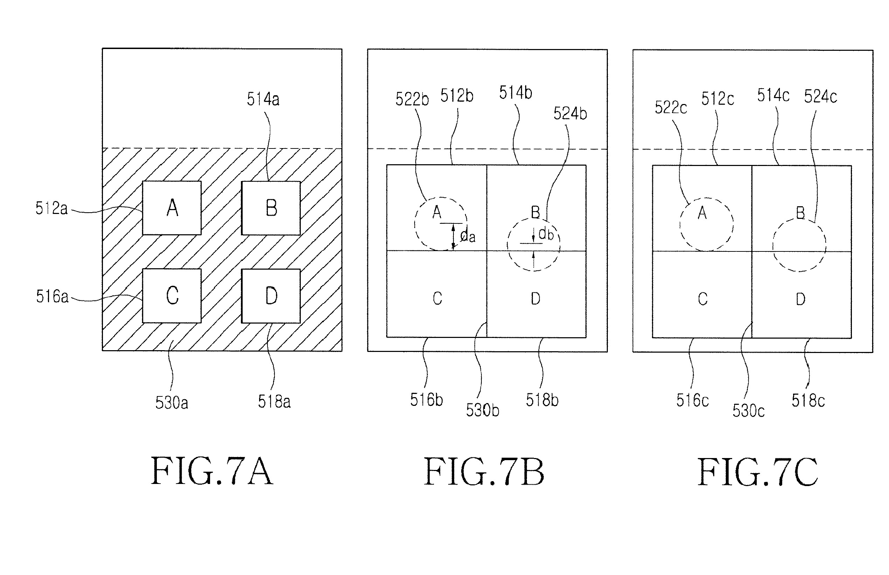

The scheme for discriminating the edge area, i.e. the area adjacent to and including the edge line between the soft buttons or the edge area according to the present invention can be variously implemented and specific examples will be discussed below with reference to FIG. 7.

FIGs. 7A to 7C are diagrams illustrating a scheme of discriminating the edge area of the touch screen according to the embodiment of the present invention.

Referring to FIG. 7A, the soft buttons 512a to 518a and the edge area 530a are clearly discriminated and displayed and the edge area 530a is determined like the soft button. If the user touches or clicks the edge area 530a, the controller 130 performs the program operation assigned to the edge area 530a, i.e. the operation of applying the fourth pattern vibration 438 as shown in FIG. 5C to the touch screen 200 using the actuator 205.

Referring to FIG 7B, if the soft buttons 512b to 518b are adjacent to each other and a distance dₐ between a center position (i.e. the input position) of a first user pressing area 522b and the edge line S30b exceeds a predetermined threshold value do, the controller 130 determines that the user has touched or clicked the 'A' button 512b. If a distance d_{b} between the center position (i.e. the input position) of a second user pressing area 524b and the edge line 530b is less than or equal to the predetermined threshold value do, the controller 130 determines that the user has touched or clicked the edge area (i.e. the area of distance d_{b} from the edge line).

Referring to FIG. 7C, if the soft buttons 512c to 518c are adjacent to each other and the user touches or clicks two soft buttons, the controller 130 compares the ratio of the detection values for two soft buttons with the predetermined threshold value and determines if the user has touched or clicked the edge area. For example, if the first user pressing area 522c is located as shown in FIG. 7C and the ratio of a detection value Value A of the 'A' button 512c to a detection value Value C of the 'C' button 516c exceeds a threshold value Criteria, the controller 130 determines that the user has touched or clicked the 'A' button 512c. Further, if the second user pressing area 524c is located as shown in FIG. 7C and the ratio of a detection value Value_B of the 'B' button 514c to a detection value Value_D of the 'D' button 518c is less than or equal to the threshold value Criteria, the controller 130 determines that the user has touched or clicked the edge area.

In the method for providing haptic feedback in the touch screen according to the present invention, the key input is implemented with two steps (contact/click) like the conventional mechanical button input so that there is an advantage in that key input error can be minimized and simultaneously prevented.

Further, the method for providing haptic feedback in the touch screen according to the present invention arranges the various virtual soft buttons on the touch screen and provides each of the soft buttons with the unique sense through vibration feedback so that the user can advantageously discriminate the soft buttons only through the finger sense and input the data.

It is apparent that the method for providing haptic feedback according to the present invention can be implemented in the form of hardware, software (i.e. the program), or their combination. Such a program can be stored in a volatile or non-volatile storage medium that is readable by a device like a computer, and the storage medium includes a storage device including ROM, memory including RAM, a memory chip, and an integrated circuit, an optical or magnetic storage medium including CD, DVD, magnetic disc, and magnetic tape. That is, the method for providing haptic feedback according to the present invention can be specified in the form of a program including codes for implementing the method for providing the haptic feedback. Further, such a program can be electrically transferred through any medium like a communication signal propagated in a wired or wireless way, and the present invention includes such equivalents.

While the present invention has been shown and described with reference to certain exemplary embodiments and drawings thereof, it will be understood by those skilled in the art that various changes in form and description may be made therein without departing from the spirit and scope of the invention.

## Claims

1. An apparatus for providing a haptic feedback in a touch screen, the apparatus comprising the steps of:
means for displaying a plurality of soft buttons on a touch screen;
means for applying a first pattern vibration to the touch screen if a pressing detection value for a corresponding soft button according to contact of a user input means reaches a predetermined first threshold value; and
means for applying a second pattern vibration to the touch screen if a pressing detection value for the corresponding soft button reaches a predetermined second threshold value, the second pattern vibration being different from the first pattern vibration, the second threshold value being different from the first threshold value.

2. The apparatus as claimed in claim 1, wherein the pressing detection value includes a pressure value, a resistance value, or a capacitance value outputted from the touch screen.

3. The apparatus as claimed in claim 1 or 2, wherein the first pattern vibration is a relatively low-amplitude vibration and the second pattern vibration is a relatively high-amplitude vibration.

4. The apparatus as claimed in any one of claims 1 to 3, wherein the second threshold value is set to be higher than the first threshold value if the pressing detection value is a pressure value, and
the second threshold value is set to be lower than the first threshold value if the pressing detection value is a resistance value or capacitance value.

5. A method for providing a haptic feedback in a touch screen, the method comprising the steps of:
displaying a plurality of soft buttons on a touch screen;
applying a first pattern vibration to the touch screen if a pressing detection value for a corresponding soft button according to contact of a user input means reaches a predetermined first threshold value; and
applying a second pattern vibration to the touch screen if the user input means is in contact with an edge area or edge line between the soft buttons, the second pattern vibration being different from the first pattern vibration.

6. The method as claimed in claim 5, further comprising applying a third pattern vibration to the touch screen if a pressing detection value for a corresponding soft button reaches a predetermined second threshold value, the third pattern vibration being different from the first and second pattern vibrations, the second threshold value being different from the first threshold value.

7. The method as claimed in claim 5 or 6, wherein the pressing detection value includes a pressure value, a resistance value, or a capacitance value outputted from the touch screen.

8. The method as claimed in claim 6, wherein the third pattern vibration is applied when an input state of the user input means indicates a mouse down operation, and the method further comprises applying a fourth pattern vibration to the touch screen if a pressing detection value for a corresponding soft button reaches the predetermined second threshold value and an input state of the user input means indicates a mouse down operation, the fourth pattern vibration being different from the first to third pattern vibrations.

9. The method as claimed in claim 6, wherein the first and third pattern vibrations are relatively low-frequency or continuous waveform vibrations and the third pattern vibration is a relatively high-frequency or periodic pulse waveform vibration.

10. The method as claimed in claim 6, wherein the second threshold value is set to be higher than the first threshold value if the pressing detection value is a pressure value, and
the second threshold value is set to be lower than the first threshold value if the pressing detection value is a resistance value or capacitance value.

11. The method as claimed in any one of claims 5 to 10, wherein the contact of the user input means with the edge line is determined by if an input position is located within a predetermined distance from the edge line or if a calculation result of detection values of two soft buttons being in contact with the user input means is less than or equal to a predetermined threshold value.

12. A computer-readable storage medium storing a program for executing the method for providing haptic feedback in a touch screen of any one of claims 5 to 11.

13. A portable terminal comprising a computer-readable storage medium storing a program for executing the method for providing haptic feedback in a touch screen of any one of claims 5 to 11.
